# EUROPEAN PATENT SPECIFICATION

(11) **EP 1 310 728 B1**
(45) Date of publication and mention of the grant of the patent: **04.08.2004**
(21) Application number: 02023453.0
(22) Date of filing: 21.10.2002
(51) Int. Cl.: F17C 1/16, F17C 1/06, B29C 53/60

(54) **A process for making a container for pressurized fluids, and corresponding container**
Verfahren zur Herstellung eines Druckbehälters für Fluide und entsprechenden Behälter
Procédé pour la fabrication d'un réservoir pour fluides sous pression et réservoir correspondant

(30) Priority: 07.11.2001 IT TO20011055
(43) Date of publication of application: 14.05.2003
(73) Proprietor: C.R.F. Società Consortile per Azioni, 10043 Orbassano (Torino) (IT)
(72) Inventor: Veca, Antonio, 10020 Casalborgone, (Torino) (IT); Alacqua, Stefano, 10090 Rivoli Cascine Vica, (Torino) (IT); Butera, Francesco, 10100 Torino (IT)
(74) Representative: Notaro, Giancarlo

(56) References cited:
- US-A- 3 508 677
- US-A- 3 851 786
- US-A- 5 227 208

## Description

The present invention relates to a process for making a container for pressurized fluids of the type indicated in the preamble of Claim 1 and to a container for pressurized fluids of the type indicated in the preamble of Claim **12**.

The walls formed by a plurality of layers of material notoriously have mechanical characteristics and characteristics of permeability which are better than those that can be obtained from the use of a single layer. In the specific case of containers for pressurized fluids, the provision of multilayer walls enables optimal barrier properties to be obtained, not only in regard to pure fluids or classes of fluids, but also in regard to mixtures the components of which are totally different from one another.

In this perspective, from FR-A-2.733.296 there is known a tank for pressurized gas, the main body of which is made of a multilayer thermoplastic material by means of co-extrusion or blown co-injection, there being used for this purpose an EVOH or PVDC co-polymer as main barrier material.

US-A-5,277,208 discloses a method of joining a tubular composite structure to another structure, which comprises providing a tube of sufficient tensile and shear strength with a number of circumferential grooves cut into its outer surface, and threaded or otherwise adapted for attachment at the end with an interfacing structure. The joint tube so prepared is next placed on or abutted against a conventional mandrel and held in place by friction or in some other way so as to permit its being integrated into a filament wound structure. When the filament winding phase of fabrication is completed, the assembly is placed in a conventional oven and allowed to cure. After conventional composite curing, the assembly is separated from the mandrel. Joining of the filament wound structure and the integrally wound joint cylinder to another structure may be achieved by threaded connection or other conventional joining mechanism. An example of filament winding technique is described in US-A-3,851,786.

With respect to the above known technique, the purpose of the present invention is to provide a new and advantageous process for making multilayer-wall containers for pressurized fluids.

In a general framework of this sort, a first purpose of the invention is to provide a process that will enable production in a simple and inexpensive way of containers of the type referred to.

Another purpose of the invention is that of overcoming the current technological difficulties deriving from the use of a high number of layers of material. It is to be noted, in this connection, that the known processes of co-extrusion or blown co-extrusion presuppose the use of extremely complex machinery, which does not moreover enable production of walls having a number of layers higher than a certain limit, for example nine layers.

Another purpose of the invention is to provide a process that will enable production of containers of the type referred to, which, albeit extremely light, are characterized by structural sturdiness and excellent barrier properties.

A further purpose of the invention is to provide a mode of production of containers of the type referred to which will enable convenient recycling of the materials employed, when such a need arises.

The above and further purposes still, which will emerge more clearly from what follows, are achieved according to the present invention by a process for making a container for pressurized fluids, as well as by a container for pressurized fluids, the said process and container having the characteristics specified in the attached claims, which are understood as forming an integral part of the present description.

Further purposes, characteristics and advantages of the present invention will emerge clearly from the ensuing detailed description and from the annexed drawings, which are provided purely by way of explanatory and non-limiting example and in which:
- Figure 1 is a perspective view of a generic container for pressurized fluids, obtained according to the present invention;
- Figure 2 is an exploded view of the container of Figure 1;
- Figure 3 is a cross section of an end area of a container obtained according to the present invention;
- Figure 4 is a partial and schematic cross-sectional view of a portion of a wall of the container of Figure 1, in accordance with a possible embodiment of the invention.

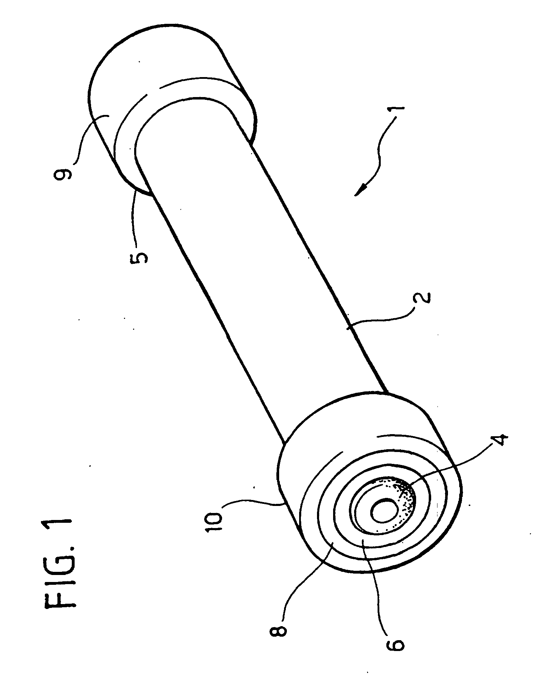

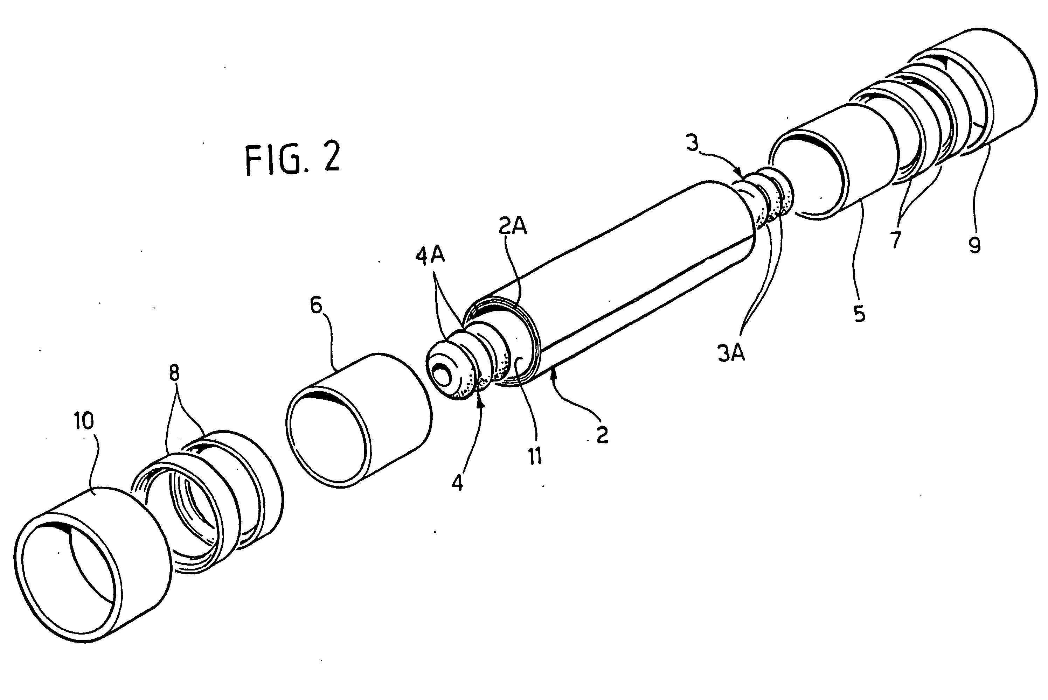

In Figures 1 and 2, the reference number 1 designates, as a whole, a container or tank for pressurized fluids, made according to the teachings of the present invention. As may be noted, particularly from Figure 2, the tank 1 is formed by:
- a main wall 2, of an on the whole cylindrical shape;
- two terminal elements or bushings, designated by 3 and 4, each defining on its own outer surface a pair of parallel seats, designated respectively by 3A and 4A;
- two cylindrical gaskets, which may possibly be used, designated by 5 and 6;
- two pairs of inner clamping rings, designated by 7 and 8; and
- two outer clamping rings, designated by 9 and 10.

The main wall 2 is formed by the superimposition of a number of layers of plastic or synthetic material. According to the invention, this is obtained by rolling on itself a number of times at least one sheet or lamina of suitable material, designated by 2A in Figure 2, so as to form a cylindrical chamber 11.

Preferably, the said sheet 2A is made via superimposition of a number of layers or films of materials that are different from one another, as will emerge clearly from what follows. In general terms moreover, the sheet 2A may also be entirely made using a single material, whether this be a thermoplastic material or a thermosetting material, selected for example among polyamides, polypropylenes, polyethylenes, polyesters, polyurethanes, polyolefins, polyacrylates, polymethacrylates, and epoxy or elastomeric resins. The materials referred to above may conveniently be nanocomposites, meaning thereby the possibility for them to be added with fillers of nanometric dimensions.

In the case presented by way of example in Figure 2, the bushing 3 is full, in as much as it is provided for obstructing the chamber 11 at the rear. The bushing 4 is, instead, envisaged for providing a sort of pipe union or pipe fitting and has a through hole for this purpose, the said hole being provided with internal thread so as to enable insertion and fixing thereto of a check valve. Of course, there is nothing to rule out, if the need should arise, a similar threaded axial hole from being provided also in the bushing 3.

The bushings 3 and 4 may be made using any material that is sufficiently rigid for the purpose for which they are designed, such as for example metal or ceramic or synthetic materials.

The rings 7-10 are preferably made of shape-memory alloy; for this purpose, one of the following alloys may be used: Ni-Ti, Ni-Ti-Cu, Cu-Al-Zn, Cu-Al-Ni.

Shape-Memory Alloys (SMAs) are in themselves well known and as such do not call for a detailed description herein, it being sufficient to recall that such alloys make it possible to obtain objects that can undergo variation of shape and dimensions when subjected to external stimuli (electrical, thermal or magnetic ones) and/or via the application of external loads.

Finally, the gaskets 5 and 6 may be made of high-hardness elastomeric material or some other material having similar characteristics.

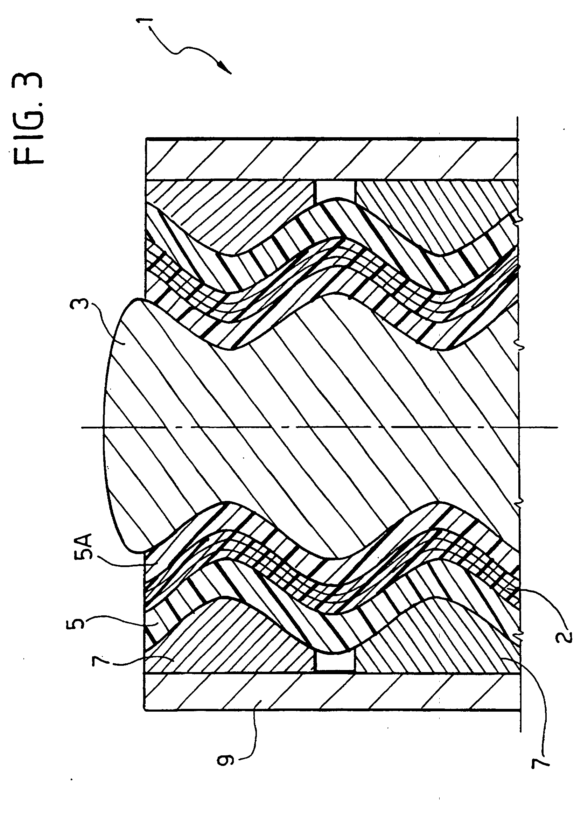

As will emerge clearly from what follows, for the purposes of production of the tank 1, the sheet 2A is rolled into a spiral on the bushings 3 and 4, so as to form the main wall 2, of cylindrical shape, which adheres, at its longitudinal ends, to the bushings themselves. The seal between the parts may be guaranteed directly by the action of the inner clamping rings 7 and 8, which provide a radial tightening of the wall 2 on the seats 3A and 4A of the bushings 3 and 4, respectively. In this way, as may be noted for example in Figure 3, a pressure is applied to the wall 2 so that it will adapt to the external profile of the bushings 3 and 4.

Between the rings 7 and 8 and the wall 2 there may be set the cylindrical gaskets 5 and 6, which are provided not so much for guaranteeing a better seal against leakage of the fluid contained in the chamber 11 as for protecting the wall 2 from micro-damage, such damage possibly deriving from the direct contact between the rings 7 and 8 and the wall 2. In other words, then, the gaskets 5 and 6 have the purpose of preventing the formation of micro-fractures in the wall 2 from possibly leading to the onset of cracks, which in turn might bring about the subsequent failure of the tank 1.

The aforesaid degree of protection from micro-damage may possibly be increased by setting further cylindrical gaskets between the wall 2 and the bushings 3 and 4. One of such possible further gaskets, set on the bushing 3, is designated in Figure 3 by 5A (a similar gasket may of course be provided also on the bushing 4).

Finally, the outer clamping rings 9 and 10 are provided for ensuring uniformity of the radial seal at the longitudinal ends of the tank 1. As may be noted in Figure 3, said outer rings 9 and 10 provide in fact for uniform radial loading of the rings 7 and 8 in the direction of the bushings 3 and 4, with the wall 2 and the possible gaskets 5, 6 and 5A set between.

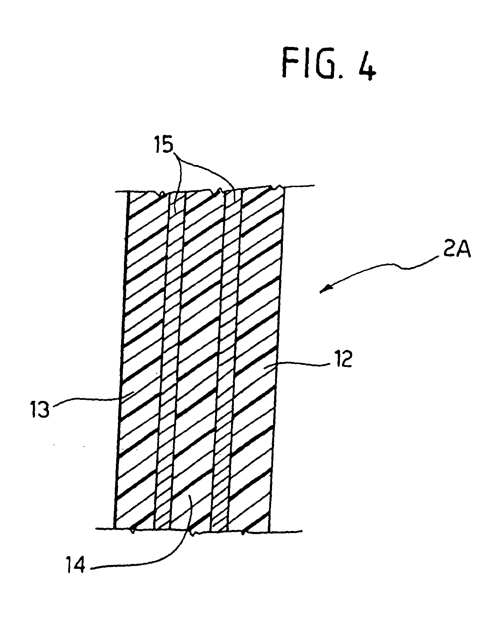

As mentioned previously, the sheet 2A that forms the wall 2 may be made up of a plurality of layers of different materials. A possible preferred embodiment in this sense is represented schematically in Figure 4, according to which the sheet 2A is obtained by superimposition of:
- a first film 12 made of nanocomposite polyamide, which has the job of functioning as barrier for the fluids contained inside the tank 1 and of, at the same time, providing a major structural contribution;
- a second film 13 made of another low-permeability polymeric material, so as to enable use of the tank 1 for containing a given gaseous component. In this perspective, for example, a film made of polyethylene may be employed in the case where the container 1 is to contain alcoholated fuels. It is to be noted therefore that the characteristic of the film 13 does not lie so much in the material that makes it up as in the function that it performs; and
- a third elastomeric film 14, for example made of polyurethane, polyester, polyacrylate, polymethacrylate, epoxy resin or polyolefin, which has the job of increasing the mechanical characteristics of the container 1, so guaranteeing a greater resistance to impact. The function of the film 14 is likewise that of acting as a bearing between the layers adjacent to it, thus favouring a slight sliding thereof so as to increase the elasticity and resilience, i.e., the impact resistance, of the container.

Between the aforesaid films there may possibly be provided also layers of adhesive, designated by 15 in Figure 4, which have the job of improving adhesion between the films 12-14; for example, the adhesion between a film 13 made of polyethylene and a film 12 made of polyamide may be improved using a layer 15 of maleic-anhydride based adhesive.

It is to be noted that the presence of the layers of adhesive 15 must in any case be considered optional in the case where the friction between the films 12-14 due to the pressure inside the tank 1 might not be considered sufficient for the purpose.

In general terms, the various films provided may have different thicknesses from one another, according to the material and the role performed. Any single layer or film provided will preferably have a thickness of between 10 and 100 µm, so that the superimposition of a number of layers on top of one another will lead to obtaining a sheet 2A of a total thickness of between 50 µm and 5 mm. Purely by way of example, the layers 12, 13, 14 and 15 of Figure 4 may have thicknesses of up to 30, 30, 20 and 10 µm, respectively. It is to be noted moreover that the sequence illustrated in Figure 4 may also be repeated for a discrete number of times, until the desired thickness and resistance of the sheet 2A is obtained, the said characteristics being dependent upon the pressure of use of the tank 1.

For the purposes of the fabrication of the tank 1, the sheet 2A is wound on itself, in the form of a roll, around the bushings 3 and 4, after prior heating of the latter in order to guarantee a perfect adhesion between the parts. In this way, the main wall 2, having a cylindrical shape, is formed, which adheres at its longitudinal ends to the bushings 3 and 4.

In the case where the gaskets 5A are envisaged, the latter will be fitted on the bushings 3 and 4 before the sheet 2A is rolled a number of times on itself. In the case where the gaskets 5 and 6 are envisaged, these will be fitted on the longitudinal ends of the sheet 2A after the aforesaid winding.

The pairs of inner clamping rings 7 and 8 are then fitted at the ends of the wall 2 thus formed. For this purpose, the rings 7 and 8 are deformed below the martensite-to-austenite transition temperature. The said rings, which are made of SMA, are then heated until the aforesaid transition temperature is exceeded, so that they can be fitted on the two longitudinal ends of the wall 2, aligned to the parallel seats 3A and 4A of the bushings themselves. The rings 7 and 8 subsequently resume the original shape, tightening in the direction of the bushings 3 and 4, thus guaranteeing the necessary seal. Finally, the outer rings 9 and 10, which are made of SMA, are fitted each on the respective pair of rings 7 and 8, adopting modalities similar to the ones just described, so that the former, as they tend to return to the their original shape, are tightened on the latter, thus guaranteeing the uniformity of the seal in the end areas of the tank 1.

Containers made according to the invention may find application in various sectors, such as use as tanks for containing gaseous fuels for vehicles, containers for sprays, more or less large-sized cylinders, for example for sport or leisure activities (e.g., cylinders for oxygen, cylinders for camping, etc.). The dimensions of the containers according to the invention may hence vary according to the application.

From the foregoing description, there clearly emerge the characteristics of the process for making containers for pressurized fluids and of the container for pressurized fluids according to the present invention, which are specified in greater detail in the attached claims.

From the foregoing description there likewise clearly emerge the advantages of the invention, principally represented by the simplicity of implementation of the process described, by the possibility of obtaining containers having excellent characteristics of impermeability to a high number of pure compounds and of mixtures, by the possibility of obtaining containers having high mechanical performance, and by the possibility of ease of separation of the various parts of the container in view of the possible recycling of the materials that make it up.

It is clear that, for the person skilled in the branch, numerous variations may be made to the process and to the container described herein by way of example, without thereby departing from the sphere of novelty inherent in the inventive idea.

The number of inner clamping rings 7, 8 made of SMA (and hence of the parallel seats 3A and 4A), as well as of outer rings 9, 10 made of SMA could vary with respect to what is illustrated and described herein by way of example. The said means used for radial tightening of the wall 2 on the bushings 3 and 4 may have a shape different from the one illustrated, provided that it is suitable for the proposed purpose, and may be made using a material other than a shape-memory alloy.

Containers according to the invention may be provided with one or more outer layers of surface coating in order to improve the characteristics of permeability, as well as to provide an adequate mechanical protection and protection against abrasion. The materials used for this purpose may be thermosetting plastics (either elastomers or not). It is pointed out that it is also possible to envisage a fire-resistant layer, in order to guarantee flame-proof protection of the container according to the invention.

## Claims

1. A process for making a container for pressurized fluids (1), which envisages the formation of a wall made of plastic or synthetic material (2), comprising a plurality of superimposed layers and designed to delimit at least in part a chamber (11) for containing the fluid, the said process being **characterized in that** it envisages the steps of:
a) preliminary forming at least one sheet (2A) of plastic or synthetic material (2);
b) aligning with respect to one another two terminal elements (3, 4), in particular according to one and the same axis;
c) winding on itself and around said terminal elements (3, 4) said at least one sheet (2A), said wall (2) being thus formed by said sheet (2A), with the windings of the latter forming said superimposed layers and said terminal elements (3, 4) forming two longitudinal ends of said chamber (11); and
d) tightening radially on said terminal elements (3, 4) the wall (2) formed by the windings of said sheet (2A).

2. The process according to Claim 1, in which said wall (2) is tightened radially on each of said terminal elements (3, 4) by means of at least one respective first annular element made of shape-memory alloy (7, 8).

3. The process according to Claim 1 or Claim 2, in which said sheet (2A) is in turn formed in a number of layers, in particular made of materials that are different from one another.

4. The process according to Claim 1 or Claim 2, in which said sheet (2A) is formed with a single material, in particular a thermoplastic or thermosetting material and selected from the group comprising: polyamides, polypropylenes, polyethylenes, polyesters, polyurethanes, polyolefins, polyacrylates, polymethacrylates, and epoxy or elastomeric resins.

5. The process according to Claim 2, in which each of said first annular elements (7, 8) is stressed radially towards the respective terminal element (3, 4) by at least one second element made of shape-memory alloy (9, 10).

6. The process according to Claim 1, in which the external profile of each of said terminal elements (3, 4) is previously shaped so as to define at least one depression (3A, 4A) and said wall (2) is liable to undergo deformation to adapt to said profile following said radial tightening.

7. The process according to Claim 2, in which between said first annular element (7, 8) and said wall (2) there is inserted at least one gasket (5, 6).

8. The process according to Claim 2, in which between said wall (2) and a respective terminal element (3, 4) there is inserted at least one gasket (5A).

9. The process according to Claim 3, in which said sheet (2A) is formed by superimposition of at least:
- one first layer (12) made of nanocomposite polyamide;
- one second layer (13) made of low-permeability polymeric material; and
- one third layer (14) made of elastomeric material, in particular set between said first and second layers (12, 13);
between said first, second and third layers there possibly being set an adhesive material (15).

10. The process according to one or more of the preceding claims, in which said terminal elements (3, 4) are heated before winding of said sheet (2A).

11. The process according to one or more of the preceding claims, which envisages the laying of at least one layer of outer surface coating on said wall (2).

12. A container for pressurized fluids, comprising a chamber (11) delimited at least in part by two longitudinal elements (3, 4), between which there extends a multilayer wall (2), said container being **characterized in that**
- said wall (2) is made up of at least one sheet (2A) rolled up on itself and around said longitudinal elements (3, 4), in the form of a roll,
- clamping means (7-10) are provided, for radially tightening on a respective longitudinal element (3, 4) a portion of the multilayered wall (2) formed by the rolled sheet (2A), with said two longitudinal elements (3, 4) forming two longitudinal ends of said chamber (11).

13. The container according to Claim 12, **characterized in that** that said means (7-10) comprise at least a first annular element made of shape-memory alloy (7, 8) which surrounds at least in part a respective longitudinal element (3, 4), with said multilayer wall (2) set between.

14. The container according to Claim 13, **characterized in that** said means (7-10) likewise comprise at least one second annular element made of shape-memory alloy (9, 10), which surrounds a respective first annular element (7, 8).

15. The container according to Claim 13, **characterized in that** between said first annular element (7, 8) and said wall (2) there is inserted at least one gasket (5, 6).

16. The container according to Claim 13, characterize in that between said wall (2) and a respective terminal element (3, 4) there is inserted at least one gasket (5A).

17. The container according to Claim 12, **characterized in that** the external profile of each of said longitudinal elements (3, 4) defines at least one depression (3A, 4A).

## Patentansprüche

1. Verfahren zur Herstellung eines Behälters (1) für unter Druck stehende Fluide, das die Bildung einer Wand vorsieht, die aus Kunststoff- oder Synthetikmaterial (2) hergestellt ist, umfassend eine Vielzahl von übereinanderliegenden Schichten und ausgelegt, um mindestens zum Teil eine Kammer (11) zum Einschließen des Fluids zu begrenzen, wobei das Verfahren **dadurch gekennzeichnet ist, dass** es die Schritte vorsieht:
a) vorbereitendes Bilden mindestens einer Bahn bzw. eines Bogens (2A) aus Plastik- oder Synthetikmaterial (2);
b) Ausrichten von zwei Abschlusselementen (3, 4) im Bezug aufeinander, insbesondere gemäß ein und derselben Achse;
c) Wickeln der mindestens einen Bahn (2A) auf sich selbst und um die Abschlusselemente (3, 4), wobei die Wand (2) dadurch durch die Bahn (2A) gebildet wird, wobei die Wicklungen der letzteren die aufeinander gelegten Schichten bilden und die Abschlusselemente (3, 4) zwei longitudinale Enden der Kammer (11) bilden; und
d) radiales Befestigen bzw. Festziehen der Wand (2), die durch die Wicklungen der Bahn (2A) gebildet wird, an den Abschlusselementen (3, 4).

2. Verfahren gemäß Anspruch 1, wobei die Wand (2) radial an jedem der Abschlusselemente (3, 4) durch mindestens ein jeweiliges erstes ringförmiges Element (7, 8) befestigt wird, das aus einer Gedächtniseffekt-Legierung hergestellt ist.

3. Verfahren gemäß Anspruch 1 oder 2, wobei die Bahn (2A) wiederum aus einer Anzahl von Schichten gebildet ist, die insbesondere aus Materialien hergestellt sind, die voneinander verschieden sind.

4. Verfahren gemäß Anspruch 1 oder 2, wobei die Bahn (2A) aus einem einzelnen Material gebildet ist, insbesondere einem thermoplastischen oder aushärtbaren Material, und ausgewählt ist aus der Gruppe umfassend: Polyamide, Polypropylene, Polyethylene, Polyester, Ployurethane, Polyolefine, Polyacrylate, Polymethacrylate, und Epoxy- oder Elastomerharze.

5. Verfahren gemäß Anspruch 2, wobei jedes der ersten ringförmigen Elemente (7, 8) durch mindestens ein zweites Element (9, 10), das aus einer Gedächtniseffekt-Legierung hergestellt ist, radial in Richtung des jeweiligen Abschlusselements (3, 4) gespannt wird.

6. Verfahren gemäß Anspruch 1, wobei das äußere Profil von jedem der Abschlusselemente (3, 4) vorhergehend geformt ist, um so mindestens eine Vertiefung (3A, 4A) zu definieren, und die Wand (2) dazu tendiert, eine Verformung zu durchlaufen, um das Profil dem radialen Befestigen folgend anzupassen.

7. Verfahren gemäß Anspruch 2, wobei zwischen dem ersten ringförmigen Element (7, 8) und der Wand (2) mindestens eine Dichtung (5, 6) eingesetzt wird.

8. Verfahren gemäß Anspruch 2, wobei zwischen der Wand (2) und einem jeweiligen Abschlusselement (3, 4) mindestens eine Dichtung (5A) eingesetzt wird.

9. Verfahren gemäß Anspruch 3, wobei die Bahn (2A) gebildet wird durch Übereinanderlegen von mindestens:
- einer ersten Schicht (12), die aus Nanokomposit-Polyamid hergestellt ist;
- einer zweiten Schicht (13), die aus polymerem Material mit niedriger Permeabilität hergestellt ist;
- einer dritten Schicht (14), die aus elastomerem Material hergestellt ist, die insbesondere zwischen der ersten und der zweiten Schicht (12, 13) platziert wird;
wobei zwischen der ersten, zweiten und dritten Schicht möglicherweise bzw. wahlweise ein adhäsives Material (15) platziert werden kann.

10. Verfahren gemäß einem oder mehreren der vorhergehenden Ansprüche, wobei die Abschlusselemente (3, 4) erhitzt werden, bevor die Bahn (2A) gewickelt wird.

11. Verfahren gemäß einem oder mehreren der vorhergehenden Ansprüche, das das Auflegen mindestens einer Schicht äußerer Oberflächenbeschichtung auf die Wand (2) vorsieht.

12. Behälter für unter Druck stehende Fluide, umfassend eine Kammer (11), die mindestens teilweise durch zwei longitudinale Elemente (3, 4) begrenzt wird, zwischen denen sich eine Mehrschichtwand (2) erstreckt, wobei der Behälter **dadurch gekennzeichnet ist, dass**
- die Wand (2) aus mindestens einer Bahn (2A) zusammengesetzt ist, die auf sich selbst und um die longitudinalen Elemente (3, 4) in der Form einer Rolle aufgerollt ist;
- Klemmmittel (7-10) bereitgestellt sind, zum radialen Befestigen eines Abschnitts der Mehrschichtwand (2), die durch die gerollte Bahn (2A) gebildet wird, an einem jeweiligen longitudinalen Element (3, 4), wobei die zwei longitudinalen Elemente (3, 4) zwei longitudinale Enden der Kammer (11) bilden.

13. Behälter gemäß Anspruch 12, **dadurch gekennzeichnet, dass** die Mittel (7-10) mindestens ein erstes ringförmiges Element (7, 8), das aus einer Gedächtniseffekt-Legierung hergestellt ist, umfassen, das zumindest zum Teil ein jeweiliges longitudinales Element (3, 4) umgibt, wobei die Mehrschichtwand (2) dazwischen platziert ist.

14. Behälter gemäß Anspruch 13, **dadurch gekennzeichnet, dass** die Mittel (7-10) gleichfalls mindestens ein zweites ringförmiges Element (9, 10) umfassen, das aus einer Gedächtniseffekt-Legierung hergestellt ist, das ein jeweiliges erstes ringförmiges Element (7, 8) umgibt.

15. Behälter gemäß Anspruch 13, **dadurch gekennzeichnet, dass** zwischen dem ersten ringförmigen Element (7, 8) und der Wand (2) mindestens eine Dichtung (5, 6) eingesetzt ist.

16. Behälter gemäß Anspruch 13, **dadurch gekennzeichnet, dass** zwischen der Wand (2) und einem jeweiligen Abschlusselement (3, 4) mindestens eine Dichtung (5A) eingesetzt ist.

17. Behälter gemäß Anspruch 12, **dadurch gekennzeichnet, dass** das äußere Profil von jedem der longitudinalen Elemente (3, 4) mindestens eine Vertiefung (3A, 4A) definiert.

## Revendications

1. Procédé pour la fabrication d'un réservoir pour fluides sous pression (1), qui prévoit la formation d'une paroi composée d'un matériau (2) plastique ou synthétique, comprenant une pluralité de couches superposées et conçues pour délimiter au moins en partie une chambre (11) pour contenir le fluide, ledit procédé étant **caractérisé en ce qu'**il consiste à :
a) former de manière préliminaire au moins une feuille (2A) d'un matériau (2) plastique ou synthétique ;
b) aligner l'un par rapport à l'autre deux éléments d'extrémité (3, 4), en particulier selon un seul et même axe ;
c) enrouler sur elle-même et autour desdits éléments d'extrémité (3, 4) ladite au moins une feuille (2A), ladite paroi (2) étant ainsi formée par ladite feuille (2A), avec les enroulements de cette dernière formant lesdites couches superposées et lesdits éléments d'extrémité (3, 4) formant deux extrémités longitudinales de ladite chambre (11) ; et
d) resserrer radialement sur lesdits éléments d'extrémité (3, 4) la paroi (2) formée par les enroulements de ladite feuille (2A).

2. Procédé selon la revendication 1, dans lequel ladite paroi (2) est serrée radialement sur chacun desdits éléments d'extrémité (3, 4) au moyen d'au moins un premier élément annulaire respectif composé d'un alliage à mémoire de forme (7, 8).

3. Procédé selon la revendication 1 ou la revendication 2, dans lequel ladite feuille (2A) est à son tour composée d'un nombre de couches, en particulier composée de matériaux qui sont différents les uns des autres.

4. Procédé selon la revendication 1 ou la revendication 2, dans lequel ladite feuille (2A) est composée d'un matériau unique, en particulier un matériau thermoplastique ou thermodurcissable et sélectionné à partir du groupe comprenant des : résines polyamides, polypropylènes, polyéthylènes, polyesters, polyuréthanes, polyoléfines, polyacrylates, polyméthacrylates, époxydes ou élastomères.

5. Procédé selon la revendication 2, dans lequel chacun desdits premiers éléments annulaires (7, 8) est contraint radialement vers l'élément d'extrémité respectif (3, 4) par au moins un second élément composé d'un alliage à mémoire de forme (9, 10).

6. Procédé selon la revendication 1, dans lequel le profil extérieur de chacun desdits éléments d'extrémité (3, 4) est au préalable formé pour définir au moins une dépression (3A, 4A) et ladite paroi (2) est susceptible de subir une déformation pour adapter ledit profil suivant ledit resserrement radial.

7. Procédé selon la revendication 2, dans lequel entre ledit premier élément annulaire (7, 8) et ladite paroi (2) se trouve inséré au moins un joint (5, 6).

8. Procédé selon la revendication 2, dans lequel entre ladite paroi (2) et un élément d'extrémité respectif (3, 4) se trouve inséré au moins un joint (5A).

9. Procédé selon la revendication 3, dans lequel ladite feuille (2A) est formée par superposition d'au moins :
une première couche (12) composée de polyamide nanocomposite ;
une deuxième couche (13) composée d'un matériau polymère à faible perméabilité ; et
une troisième couche (14) composée d'un matériau élastomère, en particulier installé entre lesdites première et deuxième couches (12, 13) ;
entre lesdites première, deuxième et troisième couches pouvant être installé un matériau adhésif (15).

10. Procédé selon l'une ou plusieurs des revendications précédentes, dans lequel lesdits éléments d'extrémité (3, 4) sont chauffés avant l'enroulement de ladite feuille (2A).

11. Procédé selon l'une ou plusieurs des revendications précédentes, qui prévoit la pose d'au moins une couche de surface extérieure sur ladite paroi (2).

12. Réservoir pour fluides sous pression, comprenant une chambre (11) délimitée au moins en partie par deux éléments longitudinaux (3, 4), entre lesquels s'étend une paroi à couches multiples (2), ledit réservoir étant **caractérisé en ce que** :
ladite paroi (2) est composée d'au moins une feuille (2A) roulée sur elle-même et autour desdits éléments longitudinaux (3, 4), sous la forme d'un rouleau,
des moyens de serrage (7-10) sont prévus, pour serrer radialement sur un élément longitudinal respectif (3, 4) une partie de la paroi à couches multiples (2) formée par la feuille roulée (2A), avec lesdits deux éléments longitudinaux (3, 4) formant deux extrémités longitudinales de ladite chambre (11).

13. Réservoir selon la revendication 12, **caractérisé en ce que** lesdits moyens (7-10) comprennent au moins un premier élément annulaire composé d'un alliage à mémoire de forme (7, 8) qui entoure au moins en partie un élément longitudinal respectif (3, 4), avec ladite paroi à couches multiples (2) installée entre eux.

14. Réservoir selon la revendication 13, **caractérisé en ce que** lesdits moyens (7-10) comprennent aussi au moins un second élément annulaire composé d'un alliage à mémoire de forme (9, 10), qui entoure un premier élément annulaire respectif (7, 8).

15. Réservoir selon la revendication 13, **caractérisé en ce qu'**entre ledit premier élément annulaire (7, 8) et ladite paroi (2) se trouve inséré au moins un joint (5, 6).

16. Réservoir selon la revendication 13, **caractérisé en ce qu'**entre ladite paroi (2) et un élément d'extrémité respectif (3, 4) se trouve inséré au moins un joint (5A).

17. Réservoir selon la revendication 12, **caractérisé en ce que** le profil extérieur de chacun desdits éléments longitudinaux (3, 4) définit au moins une dépression (3A, 4A).
